**Europäisches Patentamt**

**European Patent Office**

**Office européen des brevets**

(19)

(11) Veröffentlichungsnummer: **0 056 102**
**B1**

(12) **EUROPÄISCHE PATENTSCHRIFT**

(45) Veröffentlichungstag der Patentschrift:
**02.05.85**

(21) Anmeldenummer: **81109359.0**

(22) Anmeldetag: **30.10.81**

(51) Int. Cl.⁴: **B 31 B 23/74**, B 29 C 71/00,
B 26 D 1/04

(54) Vorrichtung zum Herstellen von Kunststoffbeuteln.

(30) Priorität: **13.01.81 DE 3100722**

(43) Veröffentlichungstag der Anmeldung:
**21.07.82 Patentblatt 82/29**

(45) Bekanntmachung des Hinweises auf die Patenterteilung:
**02.05.85 Patentblatt 85/18**

(84) Benannte Vertragsstaaten:
**BE FR GB IT NL**

(56) Entgegenhaltungen:
**BE - A - 823 679**
**BE - A - 862 009**
**DE - A - 1 930 841**
**DE - A - 2 358 281**
**FR - A - 2 050 744**
**FR - A - 2 171 806**
**FR - A - 2 406 595**
**FR - A - 2 431 916**

(73) Patentinhaber: **STIEGLER GMBH MASCHINENFABRIK,
Am Burren, D-7062 Rudersberg (DE)**

(72) Erfinder: **Schulze, Ehrhart, Königsberger Strasse 11,
D-7012 Fellbach (DE)**
Erfinder: **Bochtler, Franz, Welzheimer Strasse 10,
D-7062 Rudersberg (DE)**

(74) Vertreter: **Patentanwälte Phys. Bartels, Dipl.-Ing. Fink
Dipl.-Ing. Held, Lange Strasse 51,
D-7000 Stuttgart 1 (DE)**

ACTORUM AG

## Beschreibung

Die Erfindung betrifft eine Vorrichtung zum Herstellen von Kunststoffbeuteln nach dem Oberbegriff des Patentanspruchs 1.

Durch die DE-A 2 833 236 und die FR-A 2 431 916 ist eine Vorrichtung dieser Art bekannt. Die Nadeln sind bei der bekannten Vorrichtung zu zwei zueinander parallelen geraden Nadelreihen zusammengefasst, die sich je senkrecht zur Vorschubrichtung zumindest über einen grossen Teil der Breite der aufzunadelnden Beutel erstrecken. Die Nadeln der einen Nadelreihe sind gegenüber den Nadeln der anderen Nadelreihe bei der bekannten Vorrichtung jeweils auf Lücke angeordnet, so dass sich die beiden Nadelreihen kammartig durchsetzen, d.h. unabhängig voneinander bewegen können. Durch je einen jeder Nadelreihe zugeordneten gesonderten Antrieb, der unabhängig von der Tätigkeit des anderen Antriebs steuerbar ist, werden die Nadelreihen so bewegt, dass während der Bewegung der einen Nadelreihe aus der Aufnadelstellung die andere Nadelreihe, die sich noch mit dem der Fördereinrichtung zu übergebenden Stapel in Eingriff befindet, aus diesem Stapel herausgezogen und in die Aufnadelstellung bewegt wird, während die Bewegung der anderen Nadelreihe angehalten wird, sobald der auf ihr aufgenadelte Stapel auf der Fördereinrichtung zu liegen kommt, wobei die Nadelspitzen noch nicht aus dem Stapel herausgezogen worden sind.

Das Vorhandensein zweier voneinander unabhängig bewegbarer Nadelreihen wird bei der bekannten Vorrichtung deshalb für erforderlich angesehen, weil dadurch der zuletzt der Fördereinrichtung zugeführte Beutelstapel durch bleibenden Eingriff der Nadelspitzen gesichert werden kann, bis die andere Nadelreihe sich aus der Aufnadelstellung herauszubewegen beginnt oder bis zumindest ein oder mehrere neu gefertigte und aufgenadelte Beutel den zuletzt der Fördereinrichtung zugeführten Stapel an seinem vorderen Rand schützend überdecken. Dieses Sichern des zuletzt der Fördereinrichtung zugeführten Stapels soll verhindern, dass dieser durch die Blasluft in Unordnung gebracht werden kann. Der Vorteil der zwangsmässigen Sicherung des zuletzt der Fördereinrichtung zugeführten Stapels muss jedoch bei der bekannten Vorrichtung mit überwiegenden Nachteilen, die durch das Vorhandensein zweier unabhängig voneinander bewegbarer Nadelreihen bedingt sind, erkauft werden. Dadurch, dass gesonderte Antriebe für zwei Nadelreihen erforderlich sind, ergibt sich ein erhöhter konstruktiver Aufwand, woraus entsprechend hohe Herstellungskosten resultieren. Ausserdem ergibt sich der Nachteil des hohen Energieverbrauchs, der dadurch bedingt ist, dass für den absatzweisen Bewegungsablauf beider Nadelreihen jeweils die Massen der beiden Antriebssysteme beschleunigt und verzögert werden müssen.

Der Erfindung liegt die Aufgabe zu Grunde, eine Vorrichtung der in Rede stehenden Art zu schaffen, die bei einfachstem konstruktivem Aufbau das Herstellen von Beuteln und das Zusammenfassen zu Beutelstapeln auf wirtschaftliche und betriebssichere Weise gestattet.

Diese Aufgabe ist durch eine Vorrichtung mit den Merkmalen des Patentanspruchs 1 gelöst. Dadurch, dass ihr Antrieb für einen innerhalb eines einzigen Arbeitstaktes abgeschlossenen Umlauf der Nadeln ausgelegt ist, der aus der Aufnadelstellung über die Übergabestellung wieder in die Aufnadelstellung zurückführt, können ohne Betriebsunterbrechung sämtliche hergestellten Beutel unter Verwendung einer einzigen Nadelgruppe aufgenadelt und stapelweise der Fördereinrichtung übergeben werden. Ausgehend von der Aufnadelstellung wird der Bewegungsablauf der Nadelgruppe eingeleitet, nachdem die gewünschte Anzahl von Beuteln nach dem Schweissen und Abtrennen derselben auf die in der Aufnadelstellung stillstehenden Nadelspitzen aufgeschoben ist. Die Bewegung des aufgenadelten Stapels aus der Aufnadelstellung in die Übergabestellung erfolgt innerhalb der Zeit, in der die Schlauchfolienbahn für die Herstellung des ersten Beutels des nächstfolgenden Stapels durch den Bearbeitungsspalt der Schweiss- und Schneideinrichtung vorgeschoben und durch die Blasluft glattgezogen wird. Da der aufgestapelte Stapel während dieser Zeit durch die Nadelgruppe zusammengehalten wird, kann die Blasluft keine Störung verursachen. Nach Abschluss des Vorschubs der Schlauchfolienbahn beginnt die Schliessbewegung des Bearbeitungsspaltes. Dadurch, dass zu diesem Zeitpunkt die Nadeln aus dem Stapel in die Übergabestellung herausbewegt werden, werden während dieser Herausbewegung die Beutel des Stapels in der Übergabestellung an ihrem hinteren Rand zusammengedrückt, so dass selbst dann, wenn sich der Bearbeitungsspalt nach dem Herausziehen der Nadeln aus dem Stapel noch nicht ganz geschlossen haben sollte, die Beutel des nun frei gewordenen Stapels durch die restliche Blasluft nicht durcheinandergewirbelt werden können. Innerhalb der Zeit, die nach dem Schliessen des Bearbeitungsspaltes benötigt wird, um in der Folienbahn eine neue Bodenschweissnaht herzustellen, kann die Nadelgruppe ohne Verzögerung in die Aufnadelstellung zurückbewegt werden, so dass dann anschliessend nach dem Abschneiden des neuen Beutels sich der Niederhalter zum Aufnadeln dieses ersten Beutels eines neuen Stapels abwärts bewegen kann. Durch die erfindungsgemässe Bewegungsfolge der Nadelgruppe in bezug auf die Bewegung der Schweiss- und Schneideinrichtung wird durch die Ausnutzung der Schweisszeit in überraschender Weise erreicht, dass ohne die Arbeitsweise der Vorrichtung zu verlangsamen nur eine Nadelgruppe benötigt wird.

Der technische Vorteil der Erfindung besteht jedoch nicht nur darin, dass anstelle von zwei Nadelgruppen nur eine einzige Nadelgruppe benötigt wird, sondern dass dadurch gleichzeitig auch nur ein einziger Antrieb für diese eine Nadelgruppe erforderlich ist. Dies ergibt eine wesentliche Vereinfachung des Aufbaus der Vorrichtung.

Zur wesentlichen Verringerung des erforderlichen Aufwandes trägt insbesondere auch der Umstand bei, dass bei Vorhandensein nur eines einzigen Antriebes, dessen absatzweise Tätigkeit in Synchronisation zum Arbeitstakt der Schweiss- und Schneideinrichtung gesteuert werden muss, der erforderliche Steuerungsaufwand wesentlich geringer ist als bei Vorhandensein zweier je einzeln zu steuernder Antriebe für zwei Nadelgruppen, wie das bei der bekannten Vorrichtung erforderlich ist.

Eine besonders vorteilhafte Ausführungsform der Erfindung ist gemäss Anspruch 6 ausgebildet.

Die Verwendung eines Kurbelgetriebes anstelle pneumatischer Arbeitszylinder, von denen beim Stand der Technik je zwei für den Antrieb jeder Nadelgruppe vorgesehen sind, ergibt einen kompakten Vorrichtungsaufbau und ermöglicht eine schnelle Bewegung der einzigen Nadelgruppe, wobei nur verhältnismässig geringe Massenkräfte auftreten. Die Vorrichtung kann daher für besonders hohe Taktfrequenzen, d.h. für hohe Produktionsleistungen ausgelegt werden. Auch gestaltet sich die Synchronisierung der Tätigkeit des Antriebes mit dem Arbeitstakt der Schweiss- und Schneideinrichtung dabei sehr einfach. Die Anordnung kann dabei nach Anspruch 5 ausgebildet sein. Die Steuerung der Kupplungs-Bremskombination kann einen Arbeitstaktzähler aufweisen. Dieser erzeugt, sobald sein Zählerinhalt der vorgewählten Taktzahl, d.h. der Anzahl der zu einem Stapel zu vereinigenden Beutel entspricht, ein Steuersignal, das die Kupplungs-Bremskombination betätigt, so dass die Kurbelwelle des Kurbelgetriebes eine Umdrehung ausführt, aufgrund deren die Nadeln der Nadelgruppe einen Umlauf durchführen.

Weitere vorteilhafte Ausführungsformen der Erfindung sind in den übrigen Ansprüchen beansprucht.

Die Erfindung wird nachfolgend anhand eines in der Zeichnung dargestellten Ausführungsbeispiels im einzelnen erläutert.

Es zeigen:

Fig. 1 einen teils abgebrochen und aufgebrochen sowie stark schematisch vereinfacht gezeichneten Längsschnitt eines Ausführungsbeispiels der Vorrichtung, in dem der Bereich der Schweiss- und Schneideinrichtungen mit den diesem Bereich zugeordneten wichtigsten Vorrichtungsteilen zu sehen ist, und

Fig. 2 eine abgebrochen und stark schematisch vereinfacht gezeichnete perspektivische Ansicht der wesentlichen Getriebeteile des Antriebs für eine Nadelreihe und eine Fördereinrichtung des in Fig. 1 gezeigten Ausführungsbeispiels.

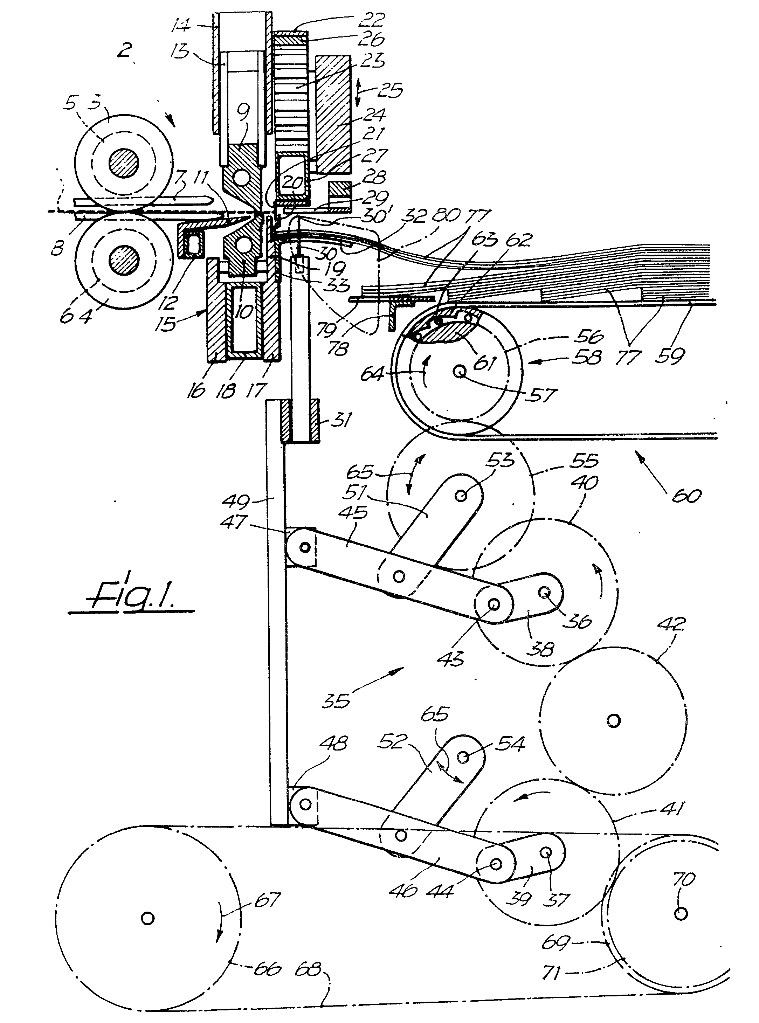

Die in der Zeichnung dargestellte Vorrichtung ist dazu vorgesehen, um von einer in ihrer Längsrichtung transportierten Schlauchfolienbahn 1 (Fig. 1) Beutel abzutrennen und dabei die Bodennähte der Beutel durch Verschweissung zu bilden. Aus Gründen der Übersichtlichkeit sind das Maschinengestell der Vorrichtung sowie eine Vielzahl von Vorrichtungsteilen nicht eingezeichnet. Es sind vielmehr lediglich die wichtigsten Teile dargestellt, die zu einer in Fig. 1 als Ganzes mit 2 bezeichneten Schweiss- und Schneideinrichtung gehören, zu dieser benachbart sind und/ oder mit dieser funktionsmässig zusammenwirken.

Beidseits der Bewegungsbahn, längs deren die Folienbahn 1 der Schweiss- und Schneideinrichtung 2 zugeführt wird, befinden sich in geringem Abstand von dieser zwei Vorschubwalzen 3 und 4, die miteinander zur Bildung eines Transportspaltes zusammenwirken. Die Vorschubwalzen 3 und 4 sind durch den nicht dargestellten Vorrichtungs-Hauptantrieb absatzweise antreibbar, um in Koordination mit dem Arbeitstakt der Schweiss- und Schneideinrichtung 2 nacheinander einen der Länge des zu fertigenden Beutels entsprechenden Längenabschnitt der Folienbahn 1 voranzubewegen. Die Vorschubwalzen 3 und 4 sind mit Umfangsnuten versehen, deren Grund mit gestrichelten Linien 5 bzw. 6 angedeutet ist und die von kammartig in Reihen angeordneten Blasluftrohren 7 und 8 durchgriffen sind. Die Schlauchfolienbahn 1 ist zwischen den Blasluftrohren 7, 8 hindurchgeführt, so dass das vordere Ende der von den Vorschubwalzen 3, 4 vorgezogenen Folienbahn 1 von dem Blasluftstrom in gestreckter Form durch den Bearbeitungsspalt der Schweiss- und Schneideinrichtung 2 hindurchbewegt wird. Die Blasluftrohre 7, 8 sind beweglich angeordnet, worauf unten noch näher eingegangen wird.

Im Gegensatz zu der Darstellung von Fig. 1, wo der Bearbeitungsspalt geschlossen ist, ist bei der Vorschubbewegung der Folienbahn 1 der Bearbeitungsspalt geöffnet, d.h. eine obere bewegliche Schweissleiste 9 befindet sich in einer angehobenen Stellung, so dass ihre Schweisskante einen Abstand zur Schweisskante einer unteren feststehenden Schweissleiste 10 besitzt. Eine zusammen mit den Blasluftrohren 7, 8 bewegliche Abweiserwinkelleiste 11, die unterhalb der Folienbahn 1 angeordnet ist, erstreckt sich mit ihrem freien Rand bis in die Nähe der Schweisskante der unteren Schweissleiste 10. Die Abweiserwinkelleiste 11, deren Funktion unten näher erläutert wird, wird mittels eines als Kühlwasserleitung dienenden Vierkantrohres 12 gekühlt.

Die bewegliche Schweissleiste 9 ist an Haltestegen 13 befestigt, die an einem Schweissleistenträger 14 vertikal bewegbar geführt sind. Die Getriebeeinrichtung, die die bewegliche Schweissleiste 9 für das Erzeugen der arbeitstaktmässig erfolgenden Vertikalbewegung mit dem Vorrichtungs-Hauptantrieb verbindet, ist nicht dargestellt. Die untere, feststehend angeordnete Schweissleiste 10 ist an einem starren Schweissleistenträger 15 fest angebracht. Dieser ist beim gezeigten Ausführungsbeispiel aus zwei Schenkeln 16 und 17 aufgebaut, zwischen denen sich zur Kühlung ein Rechteckrohr 18 erstreckt, durch das Kühlwasser strömt. An einem nach aufwärts vorspringenden Ansatz 19 des Schenkels 17 ist ein Z-Profil-Steg 20 befestigt, der zusammen mit dem oberen Ende des Ansatzes 19 eine Führungsnut für ein umlaufendes Messer 21 bildet, längs deren dieses zum Abtrennen der einzelnen Beutel von der Folienbahn 1 vom einen Seitenrand derselben zum anderen bewegbar ist. Das Messer 21 ist an einem Zahnbandriemen 22 befestigt. Dieser ist über zwei Zahnbandscheiben 23, von denen in Fig. 1 eine zu sehen ist, so geführt, dass sein oberes und sein unteres Trum horizontal über die ganze Breite der Folienbahn 1 verläuft. Die Zahnbandscheiben 23 sind an einem Träger 24 drehbar gelagert, der, wie es mit einem Doppelpfeil 25 angedeutet ist, vertikal auf und ab bewegbar ist, so dass der Zahnbandriemen 22 mit dem an ihm befestigten Messer 21 aus der in Fig. 1 gezeigten Arbeitsstellung heraus zum Öffnen des Bearbeitungsspaltes nach oben bewegt werden kann. Der Antrieb für die die Arbeitsbewegung des Messers 21 erzeugende Drehbewegung der Zahnbandscheiben 23 und für die Vertikalbewegung des Trägers 24 ist in der Zeichnung nicht dargestellt. Das obere Trum des Zahnbandriemens 22 ist über eine Stützleiste 26 geführt, die mit dem Träger 24 fest verbunden ist. Das untere Trum des Zahnbandriemens 22 verläuft längs der Unterseite eines von Kühlwasser durchströmten Vierkantrohres 27.

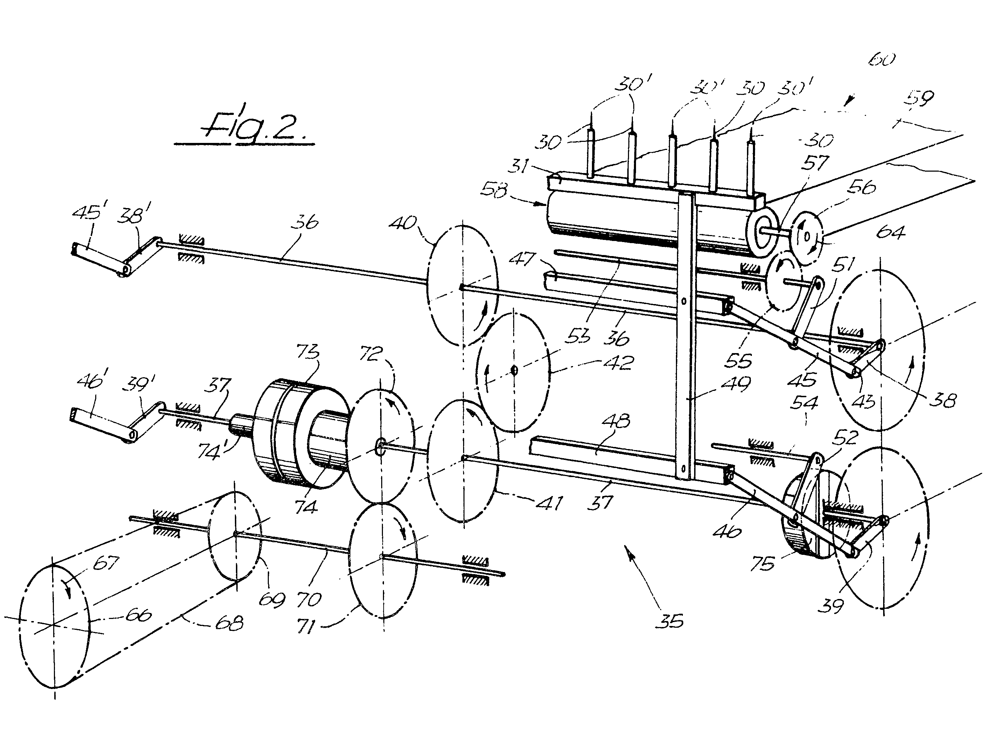

Ein unterhalb des Trägers 24 angeordneter beweglicher Niederhalter 28 erstreckt sich mit einer rechenartig ausgesparten Leiste 29 unterhalb des unteren Trums des Zahnbandriemens 22. Der Niederhalter 28 ist ebenfalls vertikal bewegbar, wobei auch in diesem Falle die Getriebeeinrichtung zum Erzeugen der Bewegung nicht in der Zeichnung dargestellt ist. In der in Fig. 1 gezeigten Lage befindet sich die Leiste 29 oberhalb der Spitzen 30' von Nadeln 30 (Fig. 2), die an den Zinken einer kammartigen Nadelleiste 31 befestigt sind, wobei die Nadeln 30 eine geradlinige Nadelreihe bilden, die sich senkrecht zur Vorschubrichtung im wesentlichen über die gesamte Breite der Folienbahn 1 erstreckt. In Fig. 1 befindet sich die Nadelleiste 31, die, wie nachfolgend beschrieben wird, beweglich gelagert ist, in ihrer Aufnadelstellung, in der die Nadeln 30 die einseitig geöffneten Schlitze in einem oberen Schenkel eines Winkelprofils 33 durchgreifen, der eine Auflagefläche 32 für die aufgenadelten Beutel bildet. Das Winkelprofil 33 ist am Ansatz 19 des Schenkels 17 des fest angeordneten Schweissleistenträgers 15 befestigt und erstreckt sich im wesentlichen über die gesamte Länge der Nadelreihe. Die in der Auflagefläche 32 ausgesparten Schlitze und die nicht eingezeichneten Blasdüsen der Blasluftrohre 7, 8 sind zueinander seitlich versetzt angeordnet.

Für die Bewegung der Nadelleiste 31 ist ein als Ganzes mit 35 bezeichnetes Parallel-Doppelkurbelgetriebe vorgesehen. Dieses Getriebe weist zwei im Abstand zueinander parallel verlaufende Kurbelwellen 36 und 37 auf, die am Maschinengestell drehbar gelagert sind, und zwar mit zu den Achsen der Vorschubwalzen 3, 4 parallel verlaufender Achsrichtung. Die Länge der Kurbelwellen 36 und 37 ist grösser als die Breite der breitesten mit der Vorrichtung zu verarbeitenden Folienbahn 1, so dass die Kurbelwellen 36, 37 seitlich über die Transportbahn vorstehen. An jedem Ende jeder Kurbelwelle 36, 37 ist je eine Kurbel befestigt. Alle Kurbeln sind einander parallel angeordnet und gleich ausgebildet. Die beiden Kurbeln der Kurbelwelle 36 sind mit 38 und 38' bezeichnet, die Kurbeln der Kurbelwelle 37 mit 39 und 39'. Da die mit diesen Kurbeln zusammenwirkenden weiteren Getriebeglieder zu beiden Seiten der Kurbelwellen 36, 37 gleich ausgebildet sind, sind die mit den Kurbeln 38' und 39' zusammenwirkenden Teile in Fig. 2 nicht vollständig dargestellt, und die Beschreibung kann sich auf die in Fig. 2 eingezeichneten Teile, die auch in Fig. 1 zu sehen sind, beschränken.

Im zentralen Bereich jeder Kurbelwelle 36 und 37 ist je ein Stirnrad 40 bzw. 41 befestigt, die gleich gross sind und mit einem Zwischenrad 42 kämmen, so dass die Drehbewegung beider Kurbelwellen 36 und 37 synchron erfolgt und die Kurbeln 38 und 39 in jeder Drehstellung zueinander parallel sind. Am Kurbelzapfen 43 bzw. 44 der gleich langen Kurbeln 38 und 39 ist je eine Kurbelstange 45 bzw. 46, die gleich ausgebildet sind, mit ihrem einen Ende angelenkt. Jede Kurbelstange 45 und 46 ist mit ihrem anderen Ende an einer sich parallel zur Nadelleiste 31 erstreckenden Querleiste 47 bzw. 48 angelenkt. Die Querleisten 47 und 48 und die Nadelleiste 31 sind über mehrere vertikale und im Abstand voneinander parallel verlaufende Verbindungsstege 49, von denen in der Zeichnung nur einer zu sehen ist, verbunden. Die Querleisten 47 und 48 sowie die Nadelleiste 31 bilden zusammen mit den diese Teile verbindenden Stegen 49 die Koppel des Kurbelgetriebes 35. Das Parallel-Kurbelgetriebe wird durch Schwingen 51 und 52 vervollständigt, die mit ihren einen Enden im mittleren Bereich der Kurbelstangen 45 bzw. 46 angelenkt sind und mit ihren anderen Enden mit drehbar gelagerten Schwingenwellen 53 bzw. 54 verbunden sind, die mit parallel zur Achse der Kurbelwellen verlaufender Achsrichtung vertikal übereinanderliegend am Maschinengestell drehbar gelagert sind. Durch das Vorhandensein der Schwingen 51 und 52 bleiben die Kurbelstangen 45 und 46 beim Umlauf der Kurbelwellen 36 und 37 zueinander parallel, und die Stege 49 behalten die vertikale Lage bei.

Die Schwingenwellen 53 und 54 führen beim Umlauf der Kurbelwellen 36, 37 eine hin- und hergehende Drehbewegung in beiden Drehrichtungen aus (siehe Doppelpfeil 65, Fig. 1). Wie insbesondere aus Fig. 2 deutlich zu ersehen ist, ist auf der Schwingenwelle 53 ein Stirnrad 55 befestigt, das mit einem Stirnrad 56 kämmt. Das Stirnrad 56 ist auf einer Welle 57 befestigt, die eine Bandtrommel 58 trägt, über deren Umfang ein Förderband 59 einer als Ganzes mit 60 bezeichneten Fördereinrichtung geführt ist.

Die Trommel 58 weist, siehe Fig. 1, einen zylindrischen Innenkörper 61, der mit der Welle 57 auf Drehung verbunden ist, sowie einen diesen umgebenden Trommelmantel 62 auf, der an seiner Innenfläche so gestaltet ist, dass zusammen mit Wälzkörpern 63 (Fig. 1) ein Freilauf gebildet wird, über den der Mantel 62 nur in dem mit einem Pfeil 64 angegebenen Drehsinn durch die Welle 57 angetrieben werden kann, welche im Betrieb, der mit dem Doppelpfeil 65 angegebenen hin- und hergehenden Drehbewegung der Schwingenwelle 53 entsprechend, über die Stirnräder 55 und 56 abwechselnd in beiden Drehrichtungen gedreht wird.

Der Antrieb für die Kurbelwellen 36, 37 ist vom Vorrichtungs-Hauptantrieb abgeleitet, von dem in der Zeichnung nur ein Kettenrad 66 angedeutet ist. Dieses führt pro Arbeitstakt der Schweiss- und Schneideinrichtung 2 eine Umdrehung in dem Drehsinn aus, der in Fig. 2 mit einem Pfeil 67 angegeben ist. Diese Drehbewegung wird mittels einer Rollenkette 68 auf ein Kettenrad 69 übertragen, das auf einer Zwischenwelle 70 befestigt ist. Da die Zähnezahl des Kettenrads 69 geringer ist als diejenige des Kettenrades 66, dreht sich die Welle 70 mit einer Drehzahl, die grösser ist als die Drehzahl des Kettenrades 66. Ein auf der Welle 70 sitzendes Stirnrad 71 ist mit einem Stirnrad 72 gleicher Zähnezahl in Eingriff, das auf der Kurbelwelle 37 drehbar angeordnet und mit der antriebsseitigen Nabe 74 einer Eintouren-Schaltkupplung 73 auf Drehung verbunden ist. Mit ihrer abtriebsseitigen Nabe 74' ist die Kupplung 73 mit der Kurbelwelle 37 auf Drehung verbunden.

Eine auf der Kurbelwelle 37 angeordnete Bremse 75 (Fig. 2), die elektromagnetisch steuerbar ist und die, ebenso wie die Eintouren-Schaltkupplung 73, durch nicht dargestellte Steuermittel, beispielsweise Steuerschalter, betätigbar ist, ermöglicht das wahlweise Stillsetzen oder Freigeben der Drehbewegung der Kurbelwelle 37.

Nachstehend wird die Funktionsweise der Vorrichtung erläutert.

Fig. 1 zeigt die Vorrichtung in einem Betriebszustand, in dem sich die Nadeln 30 in ihrer Aufnadelstellung befinden. Auf dem Förderband 59 der Fördereinrichtung 60 liegen mehrere zuvor gebildete Beutelstapel 77 in schuppenartig versetzter gegenseitiger Anordnung auf, wobei der zuletzt an die Fördereinrichtung 60 übergebene Stapel 77 mit dem Bereich der Öffnungsränder seiner Beutel noch auf einer Stapelabstützung 78 aufliegt. Diese weist ein Auflageblech auf, das in seinem der Schweiss- und Schneideinrichtung 2 zugekehrten Randbereich 79 rechenartig geschlitzt ist, und zwar in entsprechender Weise, wie dies auch bei dem Schenkel der Fall ist, dessen Oberseite die Auflagefläche 32 für den noch nicht an die Fördereinrichtung 60 übergebenen Stapel beim Aufnadelvorgang bildet.

Fig. 1 zeigt, dass der noch nicht an die Fördereinrichtung 60 übergebene neue Stapel 77 noch unvollständig ist. Der zuletzt verschweisste und von der Folienbahn 1 abgetrennte Beutel ist durch eine nach abwärts verlaufende Aufschiebebewegung des Niederhalters 28 bereits auf die Nadeln 30 aufgenadelt, die sich in der Aufnadelstellung durch die rechenartigen Aussparungen der Auflagefläche 32 hindurch nach aufwärts erstrecken. Der Niederhalter 28 hat nach dem Aufnadeln dieses Beutels sich bereits wieder so weit nach aufwärts bewegt, dass seine Leiste 29, in deren rechenartige Aussparungen die Nadeln 30 beim Aufschieben des Beutels auf diese eingreifen, wieder oberhalb der Nadelspitzen 30' verläuft. Die Vorrichtung ist nunmehr für den nächstfolgenden Arbeitstakt bereit, der mit dem Öffnen des Bearbeitungsspaltes an der Schweiss- und Schneideinrichtung 2 beginnt. Dabei bewegen sich die bewegliche Schweissleiste 9 sowie der Niederhalter 28 nach aufwärts. Ausserdem wird das als Schneideinrichtung dienende Messer 21 am Zahnbandriemen dadurch angehoben, dass der Träger 24 der Schneideinrichtung nach aufwärts bewegt wird. Die bewegliche Abweiserwinkelleiste 11 wird durch nicht dargestellte, an sich bekannte Mittel, zusammen mit den Blasrohren 7 und 8 angehoben, so dass sie die Folienbahn in ihrem vorderen Endbereich, d.h. an der zuletzt geschweissten Bodennaht, von der Schweissleiste 10 abhebt. Gleichzeitig werden die Vorschubwalzen 3 und 4 in Tätigkeit gesetzt, um die Folienbahn, die durch den aus den Düsen der Blasluftrohre 7 und 8 austretenden Luftstrom straffgezogen wird, um eine der Beutellänge entsprechende Vorschubstrecke durch den geöffneten Spalt der Schweiss- und Schneideinrichtung 2 hindurchzubewegen. Nach Durchführen diess Vorschubschrittes wird die Drehbewegung der Vorschubwalzen 3, 4 beendet, und es beginnt der Schweiss- und Schneidvorgang. Dabei wird die bewegliche Schweissleiste 9 nach abwärts bewegt, so dass der Bearbeitungsspalt geschlossen wird. Ausserdem bewegt sich der Träger 24 nach abwärts, während der Zahnbandriemen 22 seine Umlaufbewegung durchführt, so dass das Messer 21 den Zwischenraum zwischen dem Z-Profil-Steg 20 und dem Ansatz 19 durchläuft und die Folienbahn durchtrennt. Der so gebildete Beutel, der mit seinem Öffnungsrandbereich über den Spitzen 30' der Nadeln 30 liegt, wird nunmehr durch weiteres Absenken des Niederhalters 28 auf die Nadeln aufgeschoben. Der Niederhalter 28 wird sodann wieder in die in Fig. 1 gezeigte Stellung angehoben. Damit ist ein Arbeitstakt der Schweiss- und Schneideinrichtung 2 abgeschlossen. Das Kettenrad 66 hat während dieses Arbeitstaktes eine vollständige Umdrehung durchgeführt. Bei dieser Drehbewegung des Kettenrads 66 hat das Kettenrad 69 mehr als eine Umdrehung durchgeführt, da dieses Kettenrad einen geringeren Umfang besitzt. Die Drehbewegung des Kettenrads 69, die wegen der Übersetzung mit höherer Drehzahl als die Drehbewegung des Kettenrades 66 erfolgt ist, hat eine entsprechende Drehbewegung der antriebsseitigen Nabe 74 der Kupplung 73 über die Welle 70 sowie die Stirnräder 71 und 72 hervorgerufen. Bei nicht eingerückter Schaltkupplung 73, deren abtriebsseitige Nabe 74' mit der Kurbelwelle 37 verbunden ist, ergibt sich dabei jedoch keine entsprechende Drehbewegung der Kurbelwelle 37.

Diese Schaltkupplung 73 wird erst dann eingerückt, wenn auf den Nadeln 30 die gewünschte Anzahl von Beuteln aufgenadelt ist, also wenn ein vollständiger Beutelstapel 77 aufgenadelt ist und an die Fördereinrichtung 60 übergeben werden soll. Zu diesem Zweck kann ein Zähler vorgesehen sein, der die Arbeitstakte der Schweiss- und Schneideinrichtung 2 zählt und ein Steuersignal abgibt, sobald die vorgewählte Zählsumme erreicht ist. Das Steuersignal rückt die Schaltkupplung 73 ein und löst die Bremse 75. Sobald nun, ausgehend von dem in Fig. 1 dargestellten Betriebszustand, sich der Bearbeitungsspalt an der Schweiss- und Schneideinrichtung 2 durch Anheben der Schweissleiste 9, des Trägers 24 und des Niederhalters 28 zu öffnen beginnt und ein neuer Arbeitstakt durch den Beginn der Drehbewegung der Vorschubwalzen 3 und 4 einsetzt, wird die entsprechende Drehbewegung des Kettenrades 66 und damit der antriebsseitigen Nabe 74 der Schaltkupplung 73 auf die Kurbelwelle 37 übertragen. Damit beginnt ein Arbeitsspiel des Doppelkurbelgetriebes 35 und der Fördereinrichtung 60.

Da die Antriebsbewegung für dieses Arbeitsspiel von dem Kettenrad 66 abgeleitet ist, also von einem Getriebeglied des Vorrichtungs-Hauptantriebes, das pro Arbeitstakt der Schweiss- und Schneideinrichtung 2 eine Umdrehung ausführt (d.h. eine zum Arbeitstakt der Schweiss- und Schneideinrichtung 2 synchrone, absatzweise Drehbewegung), ergibt sich für das Arbeitsspiel des Kurbelgetriebes 35 und der Fördereinrichtung 60 zwangsläufig die gewünschte Synchronisierung relativ zum Arbeitstakt. Sobald die Schaltkupplung 73 eingeschaltet wird, wird die Drehbewegung des Kettenrades 66 auf die Kurbelwellen 36 und 37 übertragen, so dass sich die Reihe der Nadeln 30 zu bewegen beginnt, wobei die Spitzen 30' der Nadeln 30 eine Koppelkurve 80 durchlaufen, die in Fig. 1 mit einer strichpunktierten Linie eingezeichnet ist. Die Koppelkurve 80 weist einen ersten, im wesentlichen geradlinig verlaufenden Abschnitt auf, der sich in Vorschubrichtung, etwas nach abwärts geneigt, erstreckt. Daran schliesst sich ein im wesentlichen geradlinig nach abwärts verlaufender zweiter Abschnitt an. Die Bewegung der Nadeln 30 aus der Aufnadelstellung beginnt unmittelbar mit Beginn des Arbeitstakts der Schweiss- und Schneideinrichtung 2, nämlich mit Beginn des vollständigen Öffnens des Bearbeitungsspaltes. Kurz nach Beginn der Öffnungsbewegung des Bearbeitungsspalts, also dem Anheben der Schweissleiste 9, des Trägers 24 und des Niederhalters 28, beginnen die Vorschubwalzen 3 und 4 einen Abschnitt der Folienbahn 1 in Vorschubrichtung zu transportieren. Dieser Abschnitt der Folienbahn 1 bildet den ersten Beutel, der für den nächstfolgenden Beutelstapel aufgenadelt wird, nachdem der zuvor gebildete Beutelstapel 77 durch die Bewegung der Nadeln 30 längs der Koppelkurve 80 an die Fördereinrichtung 60 übergeben ist.

Während der längs der beiden geradlinigen Abschnitte der Koppelkurve 80 verlaufenden Bewegung der Nadeln 30 führen die Schwingenwellen 53 und 54 eine Schwenkbewegung aus, die, bezogen auf die Blickrichtung von Fig. 1, entgegen dem Uhrzeigersinn verläuft. Dadurch wird das Stirnrad 56 über das mit der Schwingenwelle 53 verbundene Stirnrad 55 in Richtung des Pfeiles 64 gedreht. Diese Drehbewegung wird über die Freilaufkupplung (Innenkörper 61, Mantel 62 und Wälzkörper 63) auf die Trommel 58 übertragen, so dass das Förderband 59 der Fördereinrichtung 60 eine entsprechende Transportbewegung in Vorschubrichtung ausführt. Diese Transportbewegung ist beendet, wenn die Nadeln 30 am Ende des geradlinig nach abwärts verlaufenden Abschnitts der Koppelkurve 80 aus dem Stapel 77 ausgetreten sind und diesen an die Fördereinrichtung 60 übergeben haben. Die nunmehr folgende gegensinnige Schwenkbewegung der Schwingenwellen 53 und 54, d.h. die Drehbewegung des Stirnrades 56 entgegen dem Richtungspfeil 64, bleibt wegen des Vorhandenseins des Freilaufs wirkungslos, d.h. das Förderband 59 bleibt dabei im Stillstand. Die Nadeln 30 laufen aus der Übergabestellung nunmehr längs des geschwungenen Teils der Koppelkurve 80 wieder in die Aufnadelstellung zurück. Diese wird erreicht, d.h. die Kurbelwellen und Kurbeln des Doppelkurbelgetriebes 35 haben einen vollständigen Umlauf durchgeführt, bevor das Kettenrad 66 eine vollständige Umdrehung durchgeführt hat, und zwar aufgrund der Übersetzung zwischen den Kettenrädern 66 und 69. Am Ende dieser vollständigen Umdrehung der Kurbelwellen 36, 37 rückt die Schaltkupplung 73, da sie als Kupplung für Eintourenbetrieb ausgebildet ist, aus, und die Bremse 75 wird betätigt. Die Nadeln 30 befinden sich nunmehr bereits wieder in der in Fig. 1 gezeigten Aufnadelstellung, obwohl der Arbeitstakt der Schweiss- und Schneideinrichtung 2 noch nicht abgeschlossen ist. Dieser wird dadurch zum Abschluss gebracht, dass der Schweissvorgang abgeschlossen wird, der über den Spitzen 30' der Nadeln 30 liegende Abschnitt der Folienbahn 1 abgeschnitten wird und der so gebildete erste Beutel des nächsten Stapels 77 durch Niedersenken des Niederhalters 28 aufgenadelt wird.

Dadurch, dass der Antrieb des Kurbelgetriebes 35 vom arbeitstaktmässig absatzweise umlaufenden Kettenrad 66 abgeleitet ist, ergibt sich die erforderliche Synchronisierung der Bewegung der Reihe der Nadeln 30 ohne weiteres. Da darüber hinaus auch der Antrieb der Fördereinrichtung 60 vom Kurbelgetriebe 35 abgeleitet ist, erfolgt auch die Tätigkeit der Fördereinrichtung 60 in der gewünschten Koordinierung, ohne dass zusätzlicher Steuerungsaufwand erforderlich wäre.

**Patentansprüche**

1. Vorrichtung zum Herstellen von Kunststoffbeuteln aus einer Schlauchfolienbahn (1), in der innerhalb eines Arbeitstaktes das vordere Ende der Schlauchfolienbahn um die Länge eines Beutels durch den Bearbeitungsspalt einer Schweiss- und Schneideinrichtung (2) in einer Vorschubrichtung vorgeschoben, durch die Blasluft von Blasluftrohren (7, 8) glattgezogen, durch Schliessen des Bearbeitungsspaltes eine quer zur Längsachse der Schlauchfolienbahn verlaufende Bodenschweissnaht hergestellt, ein Beutel abgeschnitten und durch die Abwärtsbewegung eines auf- und abbewegbaren Niederhalters (28) auf Nadeln (30) aufgeschoben wird, so dass nach einer Anzahl von Arbeitstakten ein auf die Nadeln (30) aufgenadelter Beutelstapel (77) gebildet wird, der mit seinem hinteren Ende auf einer mit Schlitzen für die Nadeln versehenen Auflagefläche (32) aufliegt, mit einem Antrieb (35) für die Nadeln (30), der diese in einem Umlauf aus einer Umlaufbahn (80) aus der Aufnadelstellung um einen Förderschritt in der Vorschubrichtung in eine Übergabestellung und wieder zurück bewegt, in der der Beutelstapel (77) eine Unterlage für das vordere Ende eines neuen Stapels bildet und von einer Fördereinrichtung (60) während der Bewegung der Nadeln (30) aus der Aufnadelstellung in die Übergabestellung absatzweise in der Vorschubrichtung bewegt wird, dadurch gekennzeichnet, dass die Nadeln (30) zu einer einzigen Nadelgruppe zusammengefasst sind und dass ihr Antrieb (35) für einen innerhalb eines einzigen Arbeitstaktes abgeschlossenen Umlauf ausgelegt ist, innerhalb dessen die Nadeln nach dem Aufnadeln des letzten Beutels eines Stapels (77) aus der Aufnadelstellung in die Übergabestellung und nach dem Abschluss des Vorschubes der Schlauchfolienbahn (1) aus dem Stapel in der Übergabestellung herausbewegt und in die Aufnadelstellung zurückbewegt werden, bevor sich der Niederhalter (28) zum Aufnadeln des ersten Beutels eines neuen Stapels abwärts bewegt.

2. Vorrichtung nach Anspruch 1, dadurch gekennzeichnet, dass der von den Nadelspitzen (30') bei ihrer Bewegung aus der Aufnadelstellung in die Übergabestellung durchlaufene Teil der Umlaufbahn (80) einen im wesentlichen geradlinigen Kurvenabschnitt aufweist, der für das Herausziehen der Nadelspitzen (30') aus dem der Fördereinrichtung (60) zu übergebenden Beutelstapel (77) senkrecht zur Vorschubrichtung verläuft.

3. Vorrichtung nach Anspruch 2, dadurch gekennzeichnet, dass die Umlaufbahn (80) einen zweiten im wesentlichen geradlinigen Kurvenabschnitt aufweist, der im wesentlichen in der Vorschubrichtung verläuft.

4. Vorrichtung nach einem der Ansprüche 1 bis 3, dadurch gekennzeichnet, dass ein synchron mit dem Arbeitstakt umlaufendes Getriebeglied (66) mit einer Antriebswelle (36, 37) des Nadelantriebes (35) über ein drehzahlerhöhendes Übersetzungsgetriebe (66, 68, 69) verbunden ist.

5. Vorrichtung nach Anspruch 4, dadurch gekennzeichnet, dass die Antriebswelle (36, 37) über eine für eine einzige Umdrehung derselben betätigbare Kupplungs-Brems-Kombination (73, 75) antreibbar ist.

6. Vorrichtung nach einem der Ansprüche 1 bis 5, dadurch gekennzeichnet, dass der Nadelantrieb als Antriebswelle eine Kurbelwelle (36, 37) eines Kurbelgetriebes (35) aufweist, deren einmalige Umdrehung eine einzige Umlaufbewegung der Nadeln (30) verursacht.

7. Vorrichtung nach Anspruch 6, dadurch gekennzeichnet, dass das Kurbelgetriebe als Parallel-Kurbelgetriebe (35) mit zwei im Abstand zueinander parallel verlaufenden, synchron umlaufenden Kurbelwellen (36 und 37) miteinander parallelen Kurbeln (38, 39) ausgebildet ist, an denen einander parallele Kurbelstangen (45 bzw. 46) angelenkt sind, die an einem als Träger der Nadeln (30) dienenden gemeinsamen Koppelglied (47, 48, 49) angreifen und mit an ihnen angelenkten Schwingen (51 bzw. 52) verbunden sind, die ihrerseits zueinander parallel an vorrichtungsfesten Schwenkachsen (53 bzw. 54) schwenkbar gelagert sind.

8. Vorrichtung nach einem der Ansprüche 1 bis 7, dadurch gekennzeichnet, dass als Fördereinrichtung ein mit einem Trum seines Förderbandes (59) eine Auflage für die Stapel (77) bildender Bandförderer (60) vorgesehen ist und dass die Antriebsbewegung des Förderbandes (59) vom Antrieb (35) der Nadelreihe abgeleitet ist.

9. Vorrichtung nach Anspruch 7 oder 8, dadurch gekennzeichnet, dass eine Schwinge (51) über ein Getriebe (55, 56) und eine Freilaufkupplung (61, 62, 63) mit der Fördervorrichtung (60) so verbunden ist, dass durch die Bewegung der Schwinge (51, 52) durch die die Nadelgruppe aus der Aufnadelstellung in die Übergabestellung bewegt wird, die Fördervorrichtung (60) durch die Freilaufkupplung einen Vorschubschritt in der Vorschubrichtung ausführt.

**Claims**

1. Apparatus for producing plastic bags from a continuous length of tubular foil (1), in which during one operating cycle, the front end of the tubular foil is pushed forwards in a direction of feed through the operating gap of a welding and cutting device (2) by the length of one bag, and is smoothed out by the blast air of blast air pipes (7, 8), a bottom welding seam extending transversely to the longitudinal axis of the length of foil is produced by closing the operating gap, and a bag is cut off and pushed onto needles (30) by the downwards movement of an upwardly and downwardly movable holding down device (28) so that a stack (77) of bags spiked on the needles (30) is formed after a number of operating cycles, which stack lies with its rear end on a support surface (32) provided with slots for the needles, comprising a drive (35) for the needles (30) moving the needles in an orbit (80) such that in one revolution round this orbit the needles move forwards by one feed step from the bag spiking position to a bag delivery position and back, the stack (77) of bags forming a support for the front end of a new stack and being moved forwards stepwise in the direction of feed by a conveyor device (60) while the needles (30) are moving from their bag spiking position to their delivery position, characterised in that the needles (30) are combined to form a single group of needles and that their drive (35) is designed for one revolution in a closed orbit within a single operating cycle, within which orbit the needles, after they have spiked the last bag of a stack (77), are moved from the spiking position to the delivery position and, after completion of the step of forward feed of the length of tubular foil (1), the needles are moved out of the stack in the delivery position and returned to the spiking position before the holding down device (28) is moved downwards for spiking the first bag of a new stack.

2. Apparatus according to Claim 1, characterised in that that part of the orbit (80) in which the needle tips (30') move from their spiking position into their delivery position has a substantially rectilinear section which extends perpendicularly to the direction of feed for pulling the needle tips (30') out of the stack of bags (77) which is to be delivered to the conveyor device (60).

3. Apparatus according to Claim 2, characterised in that the orbit (80) has a second substantially rectilinear section extending substantially in the direction of forwad feed.

4. Apparatus according to one of the Claims 1 to 3, characterised in that a transmission member (66) rotating synchronously with the operating cycle is connected to a drive shaft (36, 37) of the needle drive (35) by way of a speed increasing transmission gearing (66, 68, 69).

5. Apparatus according to Claim 4, characterised in that the drive shaft (36, 37) may be driven by a clutch-brake combination (73, 75) designed to be actuated for a single revolution of said drive shaft.

6. Apparatus according to one of the Claims 1 to 5, characterised in that the drive shaft of the needle drive is a crank shaft (36, 37) of a crank drive (35) whose single rotation produces a single revolution of the needles (30) in their orbit.

7. Apparatus according to Claim 6, characterised in that the crank drive is a parallel crank drive (35) having two synchronously rotating crank shafts (36 and 37) extending parallel to each other at some distance apart and having parallel cranks (38, 39) to which parallel crank rods (45 and 46) are pivoted, which crank rods act on a common coupling member (47, 48, 49) serving as carrier for the needles (30), and said crank rods are connected to rocker arms (51 or 52) which are pivoted to said crank rods and are in turn pivotally mounted, parallel to each other, on swivel shafts (53 or 54) attached to the apparatus.

8. Apparatus according to one of the Claims 1 to 7 characterised in that the conveyor device is a conveyor belt (60) one strand (59) of which forms a support for the stack (77), and in that the driving movement for the conveyor belt (59) is derived from the drive (35) for the row of needles.

9. Apparatus according to Claim 7 or Claim 8, characterised in that a rocker arm (51) is connected to the conveyor device (60) by way of a transmission (55, 56) and a slip coupling (61, 62, 63) so that the movement of the rocker arm (51, 52) which moves the needle group from the spiking position to the delivery position causes the delivery device (60) to be moved forwards by one feed step by the slip coupling.

**Revendications**

1. Machine pour la fabrication de sacs en matière plastique à partir d'une bande de feuilles souples (1) dans laquelle à l'intérieur d'un cycle de travail, l'extrémité avant de la bande de feuilles souples est avancée de la longueur d'un sac dans une direction d'avancement dans l'intervalle de travail d'un dispositif de soudage et de découpage (2), de l'air de soufflage sortant de tubes d'air de soufflage (7, 8) assurant l'étalement à plat de la bande, par fermeture de l'intervalle de travail un joint soudé de fond orienté perpendiculairement à l'axe longitudinal de la bande de feuilles souples est réalisé, un sac est découpé et, par le mouvement vers le bas d'un support inférieur (28) pouvant monter et descendre, il est embroché sur des broches (30) de manière que, au bout d'un certain nombre de cycles de travail, il se forme une pile de sacs (77) embrochés sur les broches (30) et qui s'appuie par son extrémité arrière sur une surface portante (32) pourvue de fentes pour les broches, la machine comportant un dispositif d'entraînement (35) des broches (30), qui déplace celles-ci en circuit à partir d'une voie (80) depuis la position d'embrochage, d'un échelon de transport dans la direction d'avancement, jusque dans une position de transfert et qui les ramène ensuite en arrière, et dans laquelle la pile de sacs (77) constitue un support inférieur pour l'extrémité avant d'une nouvelle pile et est déplacée de façon échelonnée dans la direction d'avancement par un dispositif transporteur (60) pendant le mouvement des broches (30) de la position d'embrochement jusque dans la position de transfert, caractérisée en ce que les broches (30) sont réunies sous la forme d'un seul groupe de broches et en ce que leur entraînement (35) est agencé pour produire un parcours fermé à l'intérieur d'un seul cycle de travail, pendant lequel les broches sont déplacées, après l'embrochage du dernier sac d'une pile (77), de la position d'embrochage dans la position de transfert et, après l'arrêt de l'avance de la bande de feuilles souples (1), sont sorties de la pile dans la position de transfert et sont ramenées dans la position d'embrochage, avant que le support inférieur (28) se soit déplacé vers le bas en vue de l'embrochage du premier sac d'une nouvelle pile.

2. Machine selon la revendication 1, caractérisée en ce que la partie du parcours fermé (80) parcouru par les pointes de broches (30') lors de leur mouvement de la position d'embrochage dans la position de transfert comporte une partie sensiblement rectiligne, qui est orientée perpendiculairement à la direction d'avancement pour la sortie des pointes de broches (30') de la pile de sacs (77) à transférer sur le dispositif transporteur (60).

3. Machine selon la revendication 2, caractérisée en ce que le parcours fermé (80) comporte une seconde partie sensiblement rectiligne, qui est orientée sensiblement dans la direction d'avancement.

4. Machine selon une des revendications 1 à 3, caractérisée en ce qu'un organe de transmission (66) tournant en synchronisme avec le cycle de travail est relié à un arbre d'entraînement (36, 37) de l'entraînement de broches (35) par l'intermédiaire d'un mécanisme de transmission (66, 68, 69) augmentant la vitesse de rotation.

5. Machine selon la revendication 4, caractérisée en ce que l'arbre d'entraînement (36, 37) peut être entraîné par l'intermédiaire d'un ensemble embrayage-frein (73, 75) pouvant être actionné pour un seul tour dudit arbre.

6. Machine selon une des revendications 1 à 5, caractérisée en ce que l'entraînement des broches comporte comme arbre d'entraînement un arbre-manivelle (36, 37) d'une transmission à manivelle (35), dont un seul tour provoque un seul mouvement de circulation des broches (30).

7. Machine selon la revendication 6, caractérisée en ce que la transmission à manivelle est agencée comme une transmission à manivelles parallèles (35) comportant deux arbres-mani-velles (36 et 37) espacés l'un de l'autre, disposés parallèlement et tournant en synchronisme en étant associés à des manivelles (38, 39) mutuellement parallèles, sur lesquelles sont articulées des bielles parallèles (45, 46), qui s'accrochent sur un organe d'accouplement commun (37, 48, 49) servant de support pour les broches (30) et qui sont reliées à des bielles oscillantes (51, 52) articulées sur elles, qui sont elles-mêmes montées parallèlement entre elles de façon à pouvoir pivoter sur des pivots (53, 54) solidaires de la machine.

8. Machine selon une des revendications 1 à 7, caractérisée en ce que comme dispositif transporteur, il est prévu un transporteur à bande (60) formant avec un brin de sa bande transporteuse (59) un support pour la pile (77) et en ce que le mouvement d'entraînement de la bande transporteuse (59) est dérivé de l'entraînement (35) et de la rangée de broches.

9. Machine selon la revendication 7 ou 8, caractérisée en ce qu'une coulisse (51) est reliée par l'intermédiaire d'une transmission (55, 56) et d'un embrayage à roue libre (61, 62, 63) avec le dispositif transporteur (60), en ce que, par le mouvement de la bielle oscillante (51, 52) par lequel le groupe de broches est déplacé de la position d'embrayage dans la position de transfert, le dispositif transporteur (60) exécute sous l'effet de l'embrayage à roue libre un échelon d'avancement dans la direction d'avancement.

0 056 102

Fig.1.

11

Fig.2.